Europäisches Patentamt

European Patent Office

Office européen des brevets

(19)

(11) Publication number : **0 301 876 B1**

# (12) EUROPEAN PATENT SPECIFICATION

(45) Date of publication of patent specification :
25.03.92 Bulletin 92/13

(51) Int. Cl.⁵ : **B60P 7/13**

(21) Application number : **88306992.4**

(22) Date of filing : **29.07.88**

(54) Twistlocks.

(30) Priority : **30.07.87 GB 8718124**

(43) Date of publication of application :
**01.02.89 Bulletin 89/05**

(45) Publication of the grant of the patent :
**25.03.92 Bulletin 92/13**

(84) Designated Contracting States :
**DE FR GB IT NL SE**

(56) References cited :
**GB-A- 1 523 863**
**GB-A- 1 574 708**
**GB-A- 2 070 125**
**US-A- 4 507 032**

(73) Proprietor : **MULTI-STROKE HANDBRAKE
CONTROLS LIMITED
Green Lane
Tewkesbury Gloucestershire GL20 8HD (GB)**

(72) Inventor : **Lycett, Peter
18 Millcroft Road Streetly
Sutton Coldfield West Middlands B74 2EL (GB)**

(74) Representative : **Pacitti, Pierpaolo Alfonso
M.E. et al
Ian G. Murgitroyd and Company Mitchell
House 333 Bath Street
Glasgow G2 4ER (GB)**

## Description

This invention relates to devices known in the art as "twistlocks", which are devices for use to locate and lock I.S.O. freight transport containers (and equivalent containers built to other standards) in position on road vehicle trailers, railway wagons, and the like.

A twistlock normally comprises two essential components: (1) a locating block or "register"; and (2) a T-headed bolt or "anvil bolt". The register provides lateral location and restraint to the respective corner fitting of the I.S.O. container. The centre of the register normally has a hole which accommodates the stem of the anvil bolt, with the head of the anvil bolt being located just above the top of the register. The register is very approximately rectangular in plan. By turning the anvil bolt vertically around its stem (protruding up through the middle of the register), the T-shaped head of the anvil bolt can be either aligned with the register, or turned cross-ways thereto. When the register and the bolt head are aligned, an I.S.O. container can be lowered onto and fitted over the bolt and register, or lifted away from them. When the bolt head is turned cross-ways to the register with an I.S.O. container in place, the container is latched in place (assuming the register and the anvil bolt to be suitably anchored). Such twistlocks are well known, both for I.S.O. containers, and for containers complying with other standards.

For reasons which are known in the art, it is desirable that both the register and the anvil bolt should be retractable into the carrying deck of the relevant vehicle, or otherwise lowered to positions in which they do not protrude to cause obstructions and hazards. Manual controls to carry out the various operations involved in utilising such retractable twistlocks should preferably be simple, safe, and non-detachable.

It is also known in the art that a container retained by twistlocks can be made more secure against unwanted movements during transport by tightening the anvil bolt downwards, most simply by some form of screw clamp. An example of such a form of "screwdown twistlock" is known from patent specification GB-A-1,574,708. However, the correct operation of this known form of screwdown twistlock requires a certain skill and manual dexterity. Accordingly, it is an object of the invention to provide a screwdown twistlock in which previous difficulties of manual operation are obviated or mitigated.

GB-A-2 070 125 discloses a twistlock comprising a housing, a register, and an anvil bolt, the lower end of the bolt stem being screw-threaded and fitted with a nut which can be screwed up the bolt to bear against the housing, the twistlock comprising detent means fitted to detain the bolt in a preferred rotational position with respect to the register. However, this known twistlock has a detent means such that the bolt can be rotated out of the preferred position in either rotational direction. This technical difference from the present invention means that in the known twistlock, the bolt is not automatically held against rotation when the nut is being tightened. It is therefore an object of the invention to provide a screwdown twistlock which overcomes this technical deficiency.

According to the present invention, there is provided a screwdown twistlock comprising a housing, a register, and an anvil bolt, the bolt having a T-shaped head and a cylindrical stem depending from the head, the register having a central aperture through which the bolt stem passes, the lower end of the bolt stem being screw-threaded and fitted with a handwheel which can be screwed up the bolt to bear against the housing and thereby cause the bolt head to perform a clamping action, the twistlock comprising detent means fitted to detain the bolt in preferred rotational positions with respect to the register, said preferred rotational positions including a first position in which the bolt head is in overlying alignment with the register, and a second position in which the bolt is rotated about its stem by 90 degrees with respect to said first position relative to the register, characterised in that the detent means is such that the bolt can be rotated, with respect to the register, out of said first position in one rotational direction only.

The preferred form of the detent means consists of four equi-spaced notches on the internal surface of the central aperture in the register, the radial depths of the notches decreasing from a maximum at the upper end of said preferred rotational positions preferably include a first position in which the bolt head is in overlying alignment with the register, and a second position in which the bolt is rotated about its stem by 90 degrees with respect to said first position relative to the register. The detent means is preferably such that the bolt can be rotated, with respect to the register, out of said first position in one rotational direction only.

In the second aspect of the invention the housing preferably includes a U-channel section into which the register and the bolt can be retracted when not in use, the bottom of the U-channel section includes an aperture through which passes the screw-threaded lower end of the bolt stem; the nut, collar, or handwheel bearing against the underside of the U-channel section around said aperture when screwed up the bolt stem to bear against the housing.

According to a third aspect of the invention there is provided a screwdown twistlock for locating a superposed freight transport container, the screwdown twistlock comprising a housing, a register, and an anvil bolt, the anvil bolt comprising a T-shaped head whose outline in plan substantially matches the outline in plan of the register, the bolt further comprising a generally cylindrical stem depending from the centre of the head of the bolt and being externally screw-threaded at the end thereof remote from the head, the register having a central aperture through which the bolt stem depends, the bolt and the register being linked such that the bolt can rotate relative to the register but the bolt is limited to axial movement relative to the register within a relatively narrow range, the housing having a central recess whose internal dimensions are such that the register and the anvil bolt can be retracted together into said recess, the housing being so shaped and dimensioned that when the register is extended out of said recess, the register can be rotated through part of a revolution to rest on and be supported by the housing, the twistlock further comprising a nut, collar, or handwheel internally screw-threaded to run on the external screw thread on the bolt stem, the nut, collar, or handwheel functioning when screwed along the bolt stem towards the bolt head to bear against the housing and thereby pull the bolt head towards the housing with the extended register interposed between the bolt head and the housing, the twistlock including means to inhibit unscrewing of the nut, collar, or handwheel along the bolt stem away from the bolt head past a predetermined limit and at that limit positively to couple further rotation of the nut, collar, or handwheel to the bolt stem to cause corresponding positive rotation of the bolt, characterised in that the twistlock includes spring-loaded detent means operable to detain the bolt and the register in predetermined relative rotational positions unless relative torque exceeds an upper level, such that when the nut, collar, or handwheel is positively coupled to the bolt to cause corresponding rotation thereof, rotation of the nut, collar, or handwheel causes corresponding rotation of the register until the register is rotationally constrained sufficiently to free the rotational detention of the bolt with the register.

As will be detailed below, the above-mentioned detent means enables the requisite positioning of the register and of the bolt solely by means of vertical and/or rotational manipulation of the nut, collar, or handwheel.

The preferred form of the spring-loaded detent means consists of four equi-spaced notches on the internal surface of the central aperture in the register, the radial depths of the notches decreasing from a maximum at the upper end of the aperture to substantially zero at a predetermined distance below the upper end of the aperture, and at least one detent member movable radially of the bolt stem and spring-biassed radially outwards of the bolt stem, one opposed pair of the notches being angularly aligned with the narrow lateral dimension of the register and shaped to allow the detent member to cam out of said one pair of notches in either direction of rotational movement of the bolt relative to the register, the other opposed pair of the notches being angularly aligned with the broad lateral dimension of the register and shaped to allow the detent member to cam out of said other pair of notches in one direction only of rotational movement of the bolt relative to the register. The parts of the detent means associated with the bolt preferably comprise a diametral channel through the bolt stem, a metal ball or other suitable detent member at each end of the channel and radially slidable therein, and a compression spring housed within said channel to bias the balls or other detent members radially outwards.

Embodiments of the invention will now be described, by way of example, with reference to the accompanying drawings, in which:-

Fig. 1 is a front sectional elevation of one embodiment of screwdown twistlock in accordance with the invention, with the register and bolt raised and aligned ready to receive the corner fitting of a freight container;

Fig. 2 is a view corresponding to Fig. 1 but with the twistlock in its screwdown configuration; and

Fig. 3 is a plan view of the register on its own.

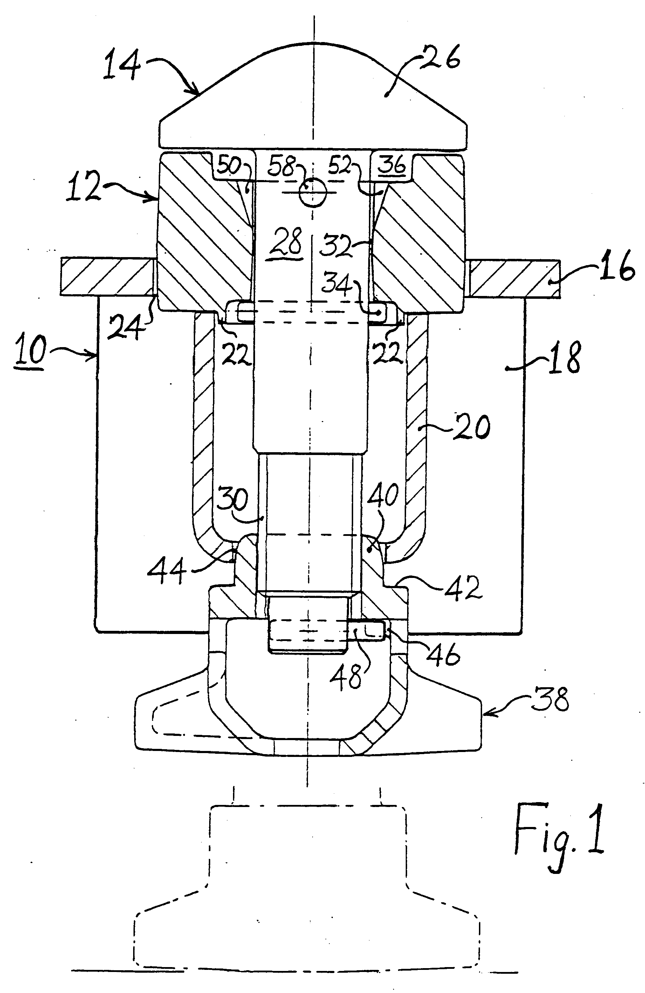

Referring first to Fig. 1, the screwdown twistlock comprises a housing 10, a register 12, and an anvil bolt 14. The housing 10 comprises a horizontal top plate 16, a vertical back plate 18, and a U-channel section 20 extending forwardly from the back plate 18, with its top edge abutting the underside of the top plate 16. The housing components 16, 18, and 20 are welded together into a unitary assembly.

The outline and principal lateral dimensions of the register 12 are substantially those of a standard I.S.O. register (but the central aperture has novel features, as will be detailed below). However, unlike the standard register illustrated in patent specification GB 1,574,708-A, the register 12 of the present invention has a substantially flat bottom (without a large stem) provided with a parallel pair of downward projections 22 for a purpose detailed below.

The use of a one-piece U-channel section 20 obviates the need to fabricate the housing 10 with two separate side plates as in GB 1,574,708-A, which both have to be held in their correct positions during welding. The internal spacing of the two sides of the U-channel section 20 is slightly greater than the minimum lateral dimension of the register 12 (see Fig. 3), i.e. the narrow width between the parallel sides of the register.

The top plate 16 has a circular aperture 24 cut through it, and partly into the upper edges of the U-channel section 20. The aperture 24 has a diameter slightly greater than the maximum lateral dimension of the register 12 (see Fig. 3). This allows the register 12 to be lifted (in a manner described below) until the downward projections 22 are clear of the cut-away upper edges of the U-chanel section 20, turned through 90 degrees, and lowered into the recess formed between the side walls of the U-channel section 20. Thus, the U-channel section 20 is not only a major structural component of the twistlock housing 10, but also allows the register 12 and the bolt 14 to be fully retracted below the top plate 16 when the twistlock is not in use.

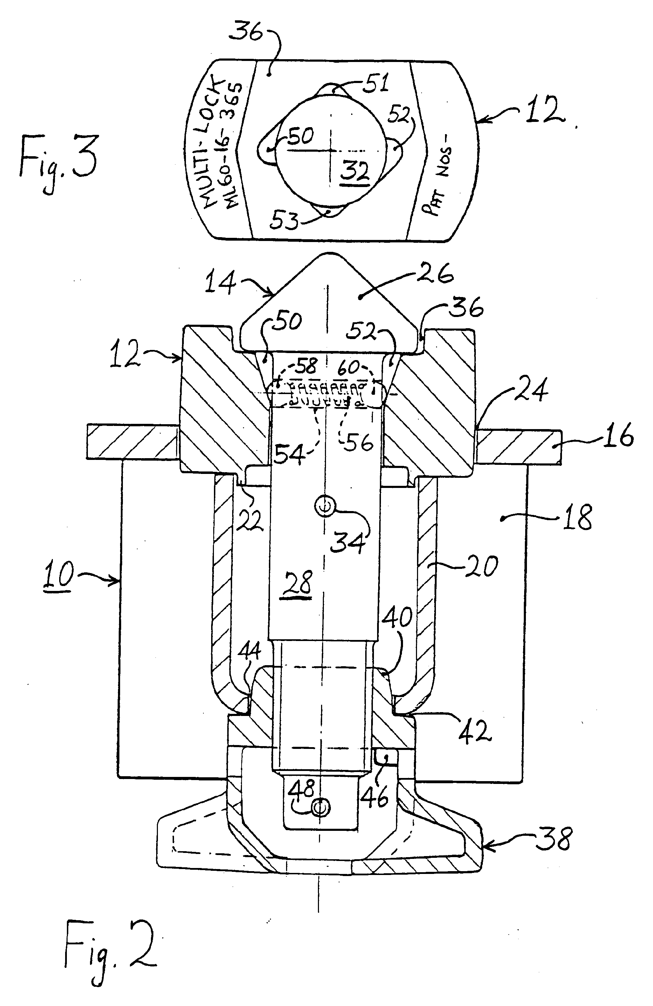

The anvil bolt 14 has a T-shaped head 26 whose outline in plan is a close match to the plan outline of the register 12 (see Fig. 3). The bolt head 26 is curved in profile to a generally dome-like form as described in patent specification GB 1,574,708-A. Depending from the bolt head 26 is a thick cylindrical stem 28 with an external screw thead 20 along its lower end portion. (It is assumed in the following description that the screw thread 30 is a conventional right-hand thread). The bolt system 28 passes through a central aperture 32 in the register 12 with sufficient clearance to allow the bolt 14 to rotate relative to the register 12. A pin 34 which is a push-fit in a diametral hole through the bolt stem 28 and protrudes on boths sides of the stem 28 is set into the stem 28 at a level which allows the bolt head 26 to be raised just above the upper surface of the register 12, further lifting of the bolt 14 relative to the register 12 being prevented by contact of the protruding ends of the pin 34 with the underside of the register 12. The upper surface of the register 12 has a shallow recess 36 extending fully across the narrow width of the register 12 (see Figs. 1 and 3) into which the bolt head 26 can be lowered when the bolt 14 is turned 90 degrees relative to the register 12 from the position shown in Fig. 1 to the position shown in Fig. 2. Figs. 1 and 2 show the limits of the relatively narrow range of vertical movement of the bolt 14 relative to the register 12.

At the lower end of the twistlock, a handwheel 38 with an internally screw-threaded neck 40 is screwed onto the external screw thread 30 on the lower end of the bolt stem 28. The handwheel neck 40 has a smaller diameter than a seating flange 42 at the upper end of the hollow body of the handwheel 38. The bottom face of the U-channel section 20 has a circular aperture 44 cut through it, the aperture 44 having a diameter which is a clearance fit around the handwheel neck 40 but which will block entry of the seating flange 42.

Inside the hollow body of the handwheel 38 is an integral internal projection 46. A pin 48 which is a push fit in a diametral hole through the bottom end of the bolt stem 28 and protrudes on one side only of the stem 28 is set into bottom end of the stem 28 at a level which allows the handwheel 38 to be unscrewed down the stem thread 30 to the position shown in Fig. 1, at which point the handwheel projection 46 collides with the stem pin 48 to prevent further rotation of the handwheel 38 in the unscrewing direction relative to the bolt stem 28.

The register aperture 32 is approximately cylindrical to allow the bolt stem 28 to move axially and rotationally within the aperture 32. The upper part of the integral surface of the aperture 32 is formed with four equi-spaced notches 50, 51, 52 and 53. (Notches 50 and 52 are visible in elevation in Figs. 1 and 2 while the notches 51 and 53 are not visible in Figs. 1 and 2; all four notches 50 to 53 are visible in plan view in Fig. 3). The radial depths of each of the notches 50 to 53 tapers from a maximum at the upper surface of the register 12 within the transverse recess 36 to zero at a selected depth slightly less than half way down the register aperture 32.

Referring now to Fig. 2, in which the bolt 14 is rotated 90 degrees about a vertical axis with respect to the position shown in Fig. 1, a diametral channel 54 is bored through the bolt stem 28 near the upper end of the stem 28 and a short distance below the bolt head 26. A compression spring 56 is carried within the channel 54, and a metal ball 58, 60 is slidingly fitted in each end of the channel 54. The spring 56 forces the balls 58 and 60 radially outwards of the bolt stem 28 to hold the balls 58 and 60 resiliently in contact either with the internal surface of the register aperture 32, or within opposed pairs of the notches (50 and 52, or 51 and 53) according to the rotational position of the botl 14 relative to the register 12.

The notches 51 and 53, which are aligned across the minimum lateral width of the register 12 (see Fig. 3) are relatively shallow and have radially tapered vertical edges. Thus, when the bolt 14 is rotated to being the detent balls 58 and 60 into the notches 51 and 53 as shown in Fig. 1, the bolt 14 is inhibited from rotating relative to the register 12 but may be so rotated by the relatively low torque required to cause the detent balls 58 and 60 to cam out of the notches 51 and 53.

The notches 50 and 52, which are aligned across the maximum lateral width of the register 12 (see Fig. 3) are relatively deep. The vertical edges of the notches 50 and 52 which are on the anti-clockwise sides of these notches (as viewed from above) are abrupt steps, whereas the opposed edges on the clockwise sides of the notches 50 and 52 have a steadily diminishing radius in the clockwise direction to act as ramps. Thus, once the bolt 14 has been rotated relative to the register 12 to being the detent balls 58 and 60 into the notches 50 and 52 as shown in Fig. 2, further rotation of the bolt 14 anti-clockwise relative to the register 12 (as viewed from above) is prevented, whereas clockwise relative movement of the bolt 14 relative to the register 12 is possible with the application of sufficient torque to overcome the detent effect of the spring-loaded detent balls 58 and 60 in the notches 50 and 52.

Operation of the screwdown twistlock of Figs. 1 to 3 will now be described:-

(1) In the initial, fully retracted configuration, both the register 12 and the bolt 14 are rotated 90 degrees from the positions shown in Fig. 1 and held within the U-channel section 20 beneath the level of the top plate 16. The handwheel 38 is lowered to the position shown in chain-dash outline at the foot of Fig. 1.

(2) In order to raise the twistlock to a position in which a freight container can be superposed on the twistlock, the handwheel 38 is fully unscrewed down the bolt stem 28 by rotating the handwheel 38 anti-clockwise as viewed from beneath (or clockwise as viewed from above) until the internal projection 46 collides with the pin 48. Next, the handwheel 38 is lifted, which also lifts the bolt 14 by reason of the threaded connection between the handwheel neck 40 and the bolt stem thread 30. The register is simultaneously lifted due to the pin 34 engaging the underside of the register 12. When sufficient lift has been applied to bring the register underside projections 22 above the upper edge of the U-channel section 20, the handwheel 38 is given a further quarter-turn anti-clockwise (as viewed from beneath). This quarter-turn of the handwheel 38 turns the bolt 14 by a quarter-turn due to the impingement of the internal projection 46 on the pin 48. Rotation of the bolt 14 brings about a corresponding rotation of the register 12 because the detent balls 58 and 60 are lodged in the notches 51 and 53. When the register 12 and the bolt 14 are turned to the angular position shown in Fig. 1, lift is removed from the handwheel 38 to lower the register 12 until it is resting on the upper edges of the U-channel section 20, with the downward projections 22 preventing further rotation of the register 12 until such time as the register 12 is again lifted off the section 20. The twistlock is now ready to have the corner fitting of a freight container lowered over it. (It should be noted that the internal width of the U-channel section 20 constrained both the register 12 and the bolt 14 to have their minimum lateral dimensions aligned in the plane of Fig. 1 when retracted, and that the above-described lifting procedure did not alter this relative angular alignment of the bolt head 26 over the register 12, whereby the bolt head 26 automatically had the correct alignment over the register 12 for superposition of the freight container without further adjustment).

(3) Once the container is in place, the handwheel 38 is given a further quarter-turn anti-clockwise (as viewed from below), without any lift being applied. The bolt 14 makes a corresponding quarter-turn since the internal projection 46 is still in contact with the pin 48. However, the register 12 is prevented from rotating by engagement of the projections 22 with the upper edges of the U-channel section 20 and/or because the register 12 is rotationally locked within the corner fitting of the freight container. The rotational locking of the register 12 does not prevent rotation of the bolt 14, since the detent balls 58 and 60 cam out of the notches 51 and 53 (ultimately to drop into the notches 50 and 52). The freight container is now latched down, in that the laterally projecting ends of the bolt head 26 prevent upward passage of the corner fitting of the freight container.

(4) In order to clamp the container, the handwheel 38 is turned clockwise (as viewed from beneath). The projection 46 disengages from the pin 48, and will spin upwardly clear on subsequent revolutions. Any tendency for the bolt 14 to rotate with clockwise movement of the handwheel 38 is positively prevented because of the inability of the detent balls 58 and 60 to move out of the register notches 50 and 52 over the step edges (i.e. the bolt 14 is prevented from moving anti-clockwise with respect to the register 12 as viewed from above in Fig. 3). As mentioned above, the register 12 is already locked against rotation, and thus only the handwheel 38 is free to rotate during tightening. When the handwheel 38 is screwed up the bolt stem 28 sufficiently for slack to be taken up, the seating flange 42 will seat against the underside of the U-channel section 20 around the aperture 44. Tension on the bolt stem 28 is thereby transferred to the twistlock housing 10. When the handwheel 38 is sufficiently tightened, the bolt head 26 will have clamped the corner fitting of the freight container against the housing top plate 16. (Fig. 2 illustrates the limiting condition of clamping, in which the bolt head 26 is hard down against the bottom of the register recess 36 and all clearances are taken up).

(5) In order to unclamp the screwdown twistlock from the fully clamped condition described above, the handwheel 38 is rotated anti-clockwise (as viewed from beneath). As the seating flange 42 unseats from the U-channel section 20, the combined effect of the radially outward forces on the detent balls 58 and 60 (induced by the spring 56) and the upwardly increasing radial depths of the notches 50 and 52 result in a lifting force being applied to the bolt 14. Consequently, when the handwheel 38 is fully unscrewed, the bolt head 26 will have fully raised itself, this obviating the need to lift the handwheel 38 as well as turning it. Ultimately, the internal handwheel projection 46 will again contact the pin 48, and the final quarter-turn of the handwheel 38 will rotate the bolt 14 clockwise as viewed from above, camming the detent balls 58 and 60 out of the notches 50 and 52 (see Fig. 3) (into the notches 51 and 53) and finally aligning the bolt head 26 over the register 12 to allow the freight container to be lifted off the twistlock. Thereafter the twistlock can be re-used to latch and clamp a further freight container, or retracted back into the housing 10 within the U-channel section 20.

As a possible modification of the illustrated form of twistlock, a drop bolt (not shown) or other locking device can be mounted on the housing 10, for example on the side of the U-channel section 20, for selectively locking the handwheel 38 against undesired rotation.

The handwheel 38 may be substituted either with an internally-threaded collar (with or without an integral handle), or with a suitably dimensioned nut.

While only a single twistlock has been described above in detail, twistlocks are customarily employed in groups, for example groups of four with one for each bottom corner of a freight container; therefore use of the twistlock in accordance with the invention should be deemed to be in an appropriate plurality thereof if use of a solitary twistlock is inadequate or undesirable.

Furthermore, while it has been assumed that the twistlock in accordance with the invention is utilised in the upright attitude shown in the accompanying drawings, the twistlock can be operated in other inclinations as desired and descriptive words relating to attitudes and relative heights are to be construed accordingly.

Notwithstanding that certain modifications and variations have been described above, the invention is not restricted thereto, and other modifications and variations can be adopted without departing from the scope of the invention as defined in the appended claims.

## Claims

1. A screwdown twistlock comprising a housing (10), a register (12), and an anvil bolt (14), the bolt (14) having a T-shaped head (26) and a cylindrical stem (28) depending from the head (26), the register (12) having a central aperture (32) through which the bolt stem (28) passes, the lower end of the bolt stem (28) being screw-threaded and fitted with a handwheel (38) which can be screwed up the bolt (14) to bear against the housing (10) and thereby cause the bolt head (26) to perform a clamping action, the twistlock comprising detent means (50-60) fitted to detain the bolt (14) in preferred rotational positions with respect to the register (12), said preferred rotational positions including a first position in which the bolt head (26) is in overlying alignment with the register (12), and a second position in which the bolt (14) is rotated about its stem (28) by 90 degrees with respect to said first position relative to the register (12), characterised in that the detent means (50-60) is such that the bolt (14) can be rotated, with respect to the register (12), out of said first position in one rotational direction only.

2. A screwdown twistlock as claimed in Claim 1, characterised in that said detent means (50-60) is formed partly on the internal surface of said central aperture (32) and partly in the bolt stem (28) where the stem (28) passes through said central aperture (32).

3. A screwdown twistlock as claimed in either one of Claims 1 or 2, characterised in that the housing (10) includes a U-channel section (20) into which the register (12) and the bolt (14) can be retracted when not in use, and in that the bottom of the U-channel section (20) includes an aperture (44) through which passes the screw-threaded lower end of the bolt stem (28); the handwheel (38) bearing against the underside of the U-channel section (20) around said aperture (44) when screwed up the bolt stem (28) to bear against the housing (10).

4. A screwdown twistlock as claimed in any one of Claims 1, 2, or 3, the anvil bolt (14) comprising a T-shaped head (26) whose outline in plan substantially matches the outline in plan of the register (12), the bolt (14) and the register (12) being linked such that the bolt (14) can rotate relative to the register (12) but the bolt (14) is limited to axial movement relative to the register (12) within a relatively narrow range, the housing (10) having a central recess whose internal dimensions are such that the register (12) and the anvil bolt (14) can be retracted together into said recess, the housing (10) being so shaped and dimensioned that when the register (12) is extended out of said recess, the register (12) can be rotated through part of a revolution to rest on and be supported by the housing, the handwheel (38) functioning when screwed along the bolt stem (28) towards the bolt head (26) to bear against the housing (10) and thereby pull the bolt head (26) towards the housing (10) with the extended register (12) interposed between the bolt head (26) and the housing (10), the twistlock including means to inhibit unscrewing of the handwheel (38) along the bolt stem (28) away from the bolt head (26) past a predetermined limit and at that limit positively to couple further rotation of the handwheel (38) to the bolt stem (28) to cause corresponding positive rotation of the bolt (14), characterised in that said means to inhibit unscrewing comprises an internal projection (46) inside the handwheel (38) and a pin (48) radially projecting from the bottom end of the bolt stem (28) such that when the handwheel (38) is positively coupled by said means (46 and 48) to the bolt (14) to cause corresponding rotation thereof, rotation of the handwheel (38) causes corresponding rotation of the register (12) until the register (12) is rotationally constrained sufficiently to free the rotational detention of the bolt (14) with the register (12).

5. A screwdown twistlock as claimed in Claim 4, wherein the detent means (50-60) is spring-loaded, characterised in that the spring-loaded detent means (50-60) consists of four equi-spaced notches (50,51,52,53) on the internal surface of the central aperture (32) in the register (12), and at least one detent member (58,60) movable radially of the bolt stem (28) and spring-biassed by a spring (56) radially outwards of the bolt stem (28), one opposed pair of notches (51,53) being shaped to allow the detent member (58,60) to cam out of said one pair of notches (51,53) in either direction of rotational movement of the bolt (14) relative to the register (12), the other opposed pair of notches (50,52) being shaped to allow the detent member (58,60) to cam out of said other pair of notches (50,52) in one direction only of rotational movement of the bolt (14) relative to the register (12).

6. A screwdown twistlock as claimed in Claim 5, characterised in that the part of the detent means (50-60) associated with the bolt (14) comprises a diametral channel (54) through the bolt stem (28), a detent member (58,60) at each end of the channel (54) and radially slidable therein, and a compression spring (56) housed within said channel (54) to bias the detent members (58,60) radially outwards.

7. A screwdown twistlock as claimed in any preceding Claim, characterised in that the detent means (50-60) consists of at least one pair of notches (50,52) on the internal surface of the central aperture (32) in the register (12), the radial depths of the notches (50,52) decreasing in a downward direction, and at least one detent member (58,60) movable radially of the bolt stem (28) and urged radially outwards of the bolt stem (28) by a compression spring (56), the interaction of the detent member (58,60) and the notches (50,52) acting to urge the bolt stem (28) upwardly from the register (12).


**Patentansprüche**

1. Anstell-Verriegelungszapfen,bestehend aus einem Gehäuse (10), einem Register (12) und einem Amboßbolzen (14), der einen T-förmigen Kopf (26) und einen zylindrischen Schaft (28) aufweist, welcher von dem Kopf (26) nach unten verläuft, wobei das Register (12) eine zentrale Öffnung (32) hat, durch die der Bolzenschaft (28) hindurchgeht, wobei das untere Ende des Bolzenschafts (28) mit einem Handrad (38) verschraubt und angepaßt ist, welches auf den Bolzen (14) aufgeschraubt werden kann, um an dem Gehäuse (10) anzuliegen, sodaß dadurch der Bolzenkopf (26) eine Klemmwirkung ausübt, und wobei der Verriegelungszapfen eine Feststelleinrichtung (50 bis 60) aufweist, die zum Halten des Bolzens (14) in bevorzugten Drehpositionen in Bezug zu dem Register (12) eingepaßt ist, wobei die bevorzugten Drehpositionen eine erste Position, in welcher der Bolzenkopf (26) eine das Register überdeckende Ausrichtung hat, und eine zweite Position umfassen, in welcher der Bolzen (14) um seinen Schaft um 90° in Bezug auf die erste Position relativ zu dem Register (12) gedreht ist, dadurch **gekennzeichnet**, daß die Feststelleinrichtung (50 bis 60) derart ausgebildet ist, daß der Bolzen (14) in Bezug auf das Register (12) nur in einer Drehrichtung aus der ersten Position heraus gedreht werden kann.

2. Anstell-Verriegelungszapfen nach Anspruch 1, dadurch **gekennzeichnet**, daß die Einstelleinrichtung (50 bis 60) teilweise an der Innenfläche der zentralen Öffnung (32) und teilweise in dem Bolzenschaft (28) dort ausgebildet ist, wo der Schaft (28) durch die zentrale Öffnung (32) hindurchgeht.

3. Anstell-Verriegelungszapfen nach Anspruch 1 oder 2, dadurch **gekennzeichnet**, daß das Gehäuse (10) einen U-förmigen Querschnitt (20) umfaßt, in welchen das Register (12) und der Bolzen (14) zurückgezogen werden können, wenn sie nicht gebraucht werden, und daß der Boden des U-förmigen Querschnitts (20) eine Öffnung (44) aufweist, durch welche das mit dem Schraubgewinde versehene untere Ende des Bolzenschafts (28) hindurchgeht, wobei das Handrad (38) gegen die Unterseite des U-förmigen Querschnitts (20) um die Öffnung (44) herum anliegt, wenn es auf den Bolzenschaft (28) aufgeschraubt ist, um gegen das Gehäuse (10) anzuliegen.

4. Anstell-Verriegelungszapfen nach einem der Ansprüche 1, 2 oder 3, wobei der Amboßbolzen (14) einen T-förmigen Kopf (26) aufweist, dessen Umriß in Draufsicht im wesentlichen mit dem Umriß in Draufsicht des Registers (12) übereinstimmt, wobei der Bolzen (14) und das Register (12) derart miteinander verknüpft sind, daß der Bolzen (14) relativ zu dem Register (12) drehen kann, dabei jedoch der Bolzen (14) auf eine Axialbewegung relativ zu dem Register (12) innerhalb eines relativ engen Bereichs begrenzt ist, wobei das Gehäuse (10) eine zentrale Aussparung hat, deren innere Abmessungen derart sind, daß das Register (12) und der Amboßbolzen (14) zusammen in die Aussparung zurückgezogen werden können, wobei das Gehäuse (10) derart geformt und dimensioniert ist, daß wenn das Register (12) aus der Aussparung heraus verlängert wird, das Register (12) um eine Teildrehung gedreht werden kann, sodaß es auf dem Gehäuse ruht und dadurch abgestützt wird, wobei das Handrad (38) bei seiner Verschraubung mit dem Bolzenschaft (28) in Richtung des Bolzenkopfes (26) dazu eingerichtet ist, daß es gegen das Gehäuse (10) anliegt und dadurch den Bolzenkopf (26) gegen das Gehäuse (10) zieht, wobei das verlängerte Register (12) zwischen dem Bolzenkopf (26) und dem Gehäuse (10) angeordnet wird, und wobei der Verriegelungszapfen eine Einrichtung aufweist, welche ein Losschrauben des Handrades (38) entlang des Bolzenschafts (28) weg von dem Bolzenkopf (26) über eine vorbestimmte Grenze hinaus verhindert und bei dieser Grenze eine weitere Drehung des Handrades (38) positiv mit dem Bolzenschaft (28) kuppelt, um eine entsprechende positive Drehung des Bolzens (14) zu bewirken, dadurch **gekennzeichnet**, daß die Einrichtung zur Verhinderung eines Losschraubens einen inneren Vorsprung (46) innerhalb des Handrades (38) und einen Stift (48) umfaßt, der von dem unteren Ende des Bolzenschafts (28) radial derart vorsteht, daß wenn das Handrad (38) durch die Einrichtung (46 und 48) positiv mit dem Bolzen (14) gekuppelt ist, um eine entsprechende Drehung zu bewirken, die Drehung des Handrades (38) eine entsprechende Drehung des Registers (12) bewirkt, bis das Register (12) in der Drehrichtung genügend eingespannt ist, um die Drehsicherung des Bolzens (14) mit dem Register (12) aufzuheben.

5. Anstell-Verriegelungszapfen nach Anspruch 4, bei welcher die Feststelleinrichtung (50 bis 60) federvorgespannt ist, dadurch **gekennzeichnet**, daß die federvorgespannte Feststelleinrichtung (50 bis 60) aus vier gleich beabstandeten Kerben (50, 51, 52, 53) an der Innenfläche der zentralen Öffnung (32) in dem Register (12) und wenigstens einem Feststellteil (58, 60) besteht, welches zu dem Bolzenschaft (28) radial beweglich ist und durch eine Feder (56) radial nach außen von dem Bolzenschaft (28) federvorgespannt wird, wobei ein gegenüberliegendes Paar der Kerben (51, 53) derart geformt ist, daß das Feststellteil (58, 60) aus diesem einen Paar der Kerben (51, 53) in jeder Richtung der Drehbewegung des Bolzens (14) relativ zu dem Register (12) gelöst werden kann und wobei das andere gegenüberliegende Paar der Kerben (50, 52) derart geformt ist, daß das Feststellteil (58, 60) von dem anderen Paar der Kerben (50, 52) nur in einer Richtung der Drehbewegung des Bolzens (14) relativ zu dem Register (12) gelöst werden kann.

6. Anstell-Verriegelungszapfen nach Anspruch 5, dadurch **gekennzeichnet**, daß der im Bolzen (14) zugeordnete Teil der Feststelleinrichtung (50 bis 60) einen diametralen Kanal (54) durch den Bolzenschaft (28) hindurch aufweist, wobei an jedem Ende des Kanals (54) ein in diesem radial verschiebliches Feststellteil (58, 60) angeordnet ist und der Kanal (54) eine Druckfeder (56) aufnimmt, um die Feststellteile (58, 60) radial nach außen vorzuspannen.

7. Anstell-Verriegelungszapfen nach einem der vorhergehenden Ansprüche, dadurch **gekennzeichnet**, daß die Feststelleinrichtung (50 bis 60) aus wenigstens einem Paar Kerben (50, 52) an der Innenfläche der zentralen Öffnung (32) in dem Register (12) besteht, wobei die radialen Tiefen der Kerben (50, 52) in einer Abwärtsrichtung abnehmen, sowie wenigstens einem Feststellteil (58, 60), welches bezüglich des Bolzenschafts (28) radial beweglich ist und radial nach außen von dem Bolzenschaft (28) durch eine Druckfeder (56) gedrückt wird, wobei durch das Zusammenwirken des Feststellteils (58, 60) und der Kerben (50, 52) der Bolzenschaft (28) nach oben in Bezug auf das Register (12) gedrückt wird.

**Revendications**

1. Boulon de verrouillage à via comprenant un corps (10), un registre (12), et un boulon-enclume (14), le boulon (14) ayant une tête en forme de T (26) et une tige cylindrique (28) qui dépend de la tête (26), le registre (12) ayant une ouverture centrale (32) à travers laquelle passe la tige de boulon (28), l'extrémité inférieure de la tige de boulon (28) étant filetée et pourvue d'une roue de manipulation (38) qui peut être vissée de bas en haut sur le boulon (14) pour porter contre le corps (10) et ainsi faire exécuter à la tête de boulon (26) une action de serrage, le boulon de verrouillage comprenant un moyen de maintien (50-60) adapté pour retenir le boulon (14) dans des positions angulaires préférées par rapport au registre (12), lesdites positions angulaires préférées comprenant une première position dans laquelle la tête de boulon (26) est en alignement et en recouvrement avec le registre (12), et une seconde position dans laquelle le boulon (14) est pivoté autour de sa tige (28) selon 90 degrés par rapport à ladite première position relative au registre (12), caractérisé en ce que le moyen de maintien (50-60) est tel que le boulon (14) peut être pivoté, par rapport au registre (12), à l'écart de ladite première position dans seulement une direction de pivotement.

2. Boulon de verrouillage à vis selon la revendication 1, caractérisé en ce que ledit moyen de maintien (50-60) est formé en partie sur la surface interne de ladite ouverture centrale (32) et en partie dans la tige de boulon (28) lorsque la tige (28) passe à travers ladite ouverture centrale (32).

3. Boulon de verrouillage à vis selon l'une des revendications 1 ou 2, caractérisé en ce que le corps (10) comprend une partie à canal en U (20) à l'intérieur de laquelle le registre (12) et le boulon (14) peuvent être rétractés lorsqu'ils ne sont pas en fonction, et dans laquelle le fond de la partie à canal en U (20) comprend une ouverture (44) à travers laquelle passe l'extrémité inférieure filetée de la tige de boulon (28) ; la roue de manipulation (38) portant contre le côté inférieur de la partie à canal en U (20) autour de ladite ouverture (44) lorsqu'elle est vissée de bas en haut sur la tige de boulon (28) pour porter contre le corps (10).

4. Boulon de verrouillage à vis selon l'une quelconque des revendications 1, 2 ou 3, le boulon-enclume (14) comprenant une tête en forme de T (26) dont le profil extérieur en plan correspond sensiblement au profil extérieur en plan du registre (12), le boulon (14) et le registre (12) étant liés de telle façon que le boulon (14) peut pivoter par rapport au registre (12) mais le boulon (14) est limité en mouvement axial par rapport au registre (12) dans une plage relativement étroite, le corps (10) ayant un évidement central dont les dimensions internes sont telles que le registre (12) et le boulon-enclume (14) peuvent être rétractés ensemble à l'intérieur dudit évidement, le corps (10) étant formé et dimensionné de telle façon que lorsque le registre (12) s'étend à l'extérieur dudit évidement, le registre (12) peut être pivoté selon une fraction de révolution pour rester en appui sur le corps et être supporté par le corps, la roue de manipulation (38) fonctionnant lorsqu'elle est vissée le long de la tige de boulon (28) en direction de la tête de boulon (26) pour porter contre le corps (10) et tirer ainsi la tête de boulon (26) en direction du corps (10) avec le registre (12) s'étendant en interposition entre la tête de boulon (26) et le corps (10), le boulon de verrouillage comprenant des moyens pour empêcher le dévissage de la roue de manipulation (38) le long de la tige de boulon (28) à l'écart de la tête de boulon (26) à partir d'une limite prédéterminée, et pour, à cette limite, coupler positivement la rotation supplémentaire de la roue de manipulation (38) à la tige de boulon (28) pour provoquer une rotation positive correspondante du boulon (14), caractérisé en ce que ledit moyen pour empêcher le dévissage comprend une projection interne (46) à l'intérieur de la roue de manipulation (38) et une clavette (48) s'étendant radialement depuis l'extrémité de fond de la tige de boulon (28) de telle façon que lorsque la roue de manipulation (38) est couplée positivement par ledit moyen (46 et 48) au boulon (14) pour provoquer sa rotation correspondante, la rotation de la roue de manipulation (38) provoque la rotation correspondante du registre (12) jusqu'à ce que le registre (12) soit forcé en rotation suffisamment pour libérer le maintien en rotation du boulon (14) par rapport au registre (12).

5. Boulon de verrouillage à vis selon la revendication 4, dans lequel le moyen de maintien (50-60) est sollicité par ressort, caractérisé en ce que le moyen de maintien sollicité par ressort (50-60) consiste en quatre encoches équidistantes (50, 51, 52, 53) sur la surface interne de l'ouverture centrale (32) du registre (12), et en au moins un membre de maintien (58, 60) déplaçable radialement sur la tige de boulon (28) et sollicité élastiquement par un ressort (56) radialement vers l'extérieur de la tige de boulon (28), une paire opposée d'encoches (51, 53) étant conformée pour permettre au membre de maintien (58, 60) de sortir hors de ladite paire d'encoches (51, 53) dans l'une ou l'autre des directions de mouvement de rotation du boulon (14) par rapport au registre (12), l'autre paire opposée d'encoches (50, 52) étant conformée pour permettre au membre de maintien (58, 60) de sortir de ladite autre paire d'encoches (50, 52) dans seulement une direction de mouvement de rotation du boulon (14) par rapport au registre (12).

6. Boulon de verrouillage à vis selon la revendication 5, caractérisé en ce que la partie du moyen de maintien (50-60) associée au boulon (14) comprend un canal diamétral (54) traversant la tige de boulon (28), un membre de maintien (58, 60) à chaque extrémité du canal (54) et coulissant radialement à l'intérieur, et un ressort de compression (56) logé à l'intérieur dudit canal (54) pour repousser les membres de maintien (58, 60) radialement vers l'extérieur.

7. Boulon de verrouillage à vis selon l'une quelconque des revendications précédentes, caractérisé en ce que le moyen de maintien (50-60) consiste en au moins une paire d'encoches (50, 52) sur la surface interne de l'ouverture centrale (32) dans le registre (12), les profondeurs radiales des encoches (50, 52) décroissant vers le bas, et au moins un membre de maintien (58, 60) déplaçable radialement sur la tige de boulon (28) et repoussé radialement vers l'extérieur de la tige de boulon (28) par un ressort de compression (56), l'interaction du membre de maintien (58, 60) et des encoches (50, 52) agissant pour repousser la tige de boulon (28) vers le haut à partir du registre (12).

Fig.1

Fig. 3

MULTI-LOCK
ML60-16-365

51

50

52

32

53

36

12

Fig. 2

14

26

50

52

36

12

58 60

24

16

54

56

22

18

34

20

10

28

40

44

42

46

48

38